# EUROPEAN PATENT SPECIFICATION

(11) **EP 3 351 646 B1**
(45) Date of publication and mention of the grant of the patent: **28.08.2019**
(21) Application number: 18152987.6
(22) Date of filing: 23.01.2018
(51) Int. Cl.: C14C 3/08, C08G 69/44, C14C 3/18

(54) **CHROMIUM-FREE TANNING AGENTS AND TANNING PROCESS**
CHROMFREIE GERBSTOFFE UND GERBVERFAHREN
AGENTS DE TANNAGE SANS CHROME ET PROCÉDÉ DE TANNAGE

(30) Priority: 24.01.2017 IT 201700007426
(43) Date of publication of application: 25.07.2018
(73) Proprietor: Re. Al. Color S.r.l., 36045 Lonigo VI (IT)
(72) Inventor: Racca, Lorenzo, 36071 Arzignano VI (IT)
(74) Representative: Montelatici, Linda Anna

(56) References cited:
- EP-A1- 1 164 163
- US-A- 4 126 413
- US-A1- 2008 045 689
- DATABASE WPI Week 200950 Thomson Scientific, London, GB; AN 2009-J90549 XP002770941, & CN 101 435 003 A (LANGSHENG WUXI CHEM CO LTD) 20 May 2009 (2009-05-20)

## Description

The present invention relates to novel chromium-free tanning agents and a tanning process using such agents.

It is well known that tanning treatments for hides can be classified according to the tanning agents used in said treatments. In particular, there are available tanning processes using vegetable or synthetic tannins, that were used in the past, and processes using trivalent chromium compounds (Cr⁺³). This tanning method is by far the most widespread because of its simplicity, speed, adaptability to all types of hides and economics.

However, chrome tanning processes are also a major concern for the toxicity and environmental danger of tanning agents containing trivalent chromium compounds.

Processes for the preparation of polyamides comprising amino-alcoholic units and dicarboxylic units are also generally known, which are described for example in US3240715 and US2008/0045689. However, these documents do not describe the use as tanning agents of the resulting polyamides.

It is further known that polymeric compositions can be superficially applied onto tanned leather in order to provide a surface finish.

For example, BE566206 discloses a surface finishing treatment that is subsequent to the tanning, wherein chromium-tanned leathers are impregnated with polyesters or polyesteramides in the presence of polyfunctional isocyanates.

WO98/38340, US3408221 and US5558675 describe methods of treatment of leather, comprising a finishing step with polyurethanes or polyester amides.

US4126413 discloses a tanning process of animal hides in which a trivalent chromium compound is used as the tanning agent together with a polycarboxylic compound which has been reacted to produce a partial ester, urethane or amide. However, this document does not disclose the use of tanning agents according to the present invention, nor the use of polymeric substances as the sole tanning agent for leather.

CN101435003 A discloses a chrome-free tanning agent prepared from glutaraldehyde and diethanol- or triethanolamine,

It is therefore an object of the present invention to provide a chromium-free tanning agent which can be used for tanning all types of leather. Said object is achieved with a tanning agent whose main features are specified in the first claim, while other features are specified in the remaining claims.

An advantage of the tanning agent according to the present invention consists in that it can be used as the sole agent for hides of every kind of animal, without the need to use tanning agents comprising trivalent chromium compounds.

The tanning agent according to the present invention has a low environmental impact and replaces chromium tanning agents, which are unsustainable from an ecological and toxicological point of view.

The tanning agent according to the present invention can be used for hides intended for the manufacture of any type of articles, for example sanitary articles for children and allergic subjects. Thanks to the low volatility of the contained substances, the hides tanned with the tanning agent according to the present invention are characterized by a low release of substances, which makes them suitable also for use in restricted environments, such as car cabins.

Moreover, the hides tanned with the tanning agent according to the present invention have considerable properties of lightness and softness.

Further advantages and features of the present invention will be clear to those skilled in the art from the following detailed and non-limiting description of some embodiments thereof.

The tanning agent for hides according to the present invention can be obtained by reaction of diethanolamine with a mixture of dicarboxylic acids comprising from 2 to 6 carbon atoms.

In the reaction between diethanolamine and the dicarboxylic acid mixture a molar ratio of diethanolamine is preferably used with respect to the dicarboxylic acid mixture of between 1.8: 1 and 2.2: 1. More preferably, this ratio used between diethanolamine and said mixture of dicarboxylic acids is 2 (± 0.1): 1 (± 0.1).

Preferably, said dicarboxylic acid mixture comprises linear aliphatic dicarboxylic acids. Still more preferably, the dicarboxylic acid mixture used for the preparation of the tanning agent according to the present invention comprises succinic acid, glutaric acid and adipic acid.

According to an embodiment of the invention, said mixture comprises succinic acid in an amount by weight of about 20% with respect to the weight of the dicarboxylic acid mixture, glutaric acid in an amount by weight of about 48% with respect to the weight of the dicarboxylic acid mixture, and adipic acid in an amount by weight between 30-32% with respect to the weight of the dicarboxylic acid mixture.

Preferably, said dicarboxylic acid mixture comprises succinic acid in an amount by weight of between 18% and 22% with respect to the weight of the dicarboxylic acid mixture, glutaric acid in an amount by weight of between 46% and 50% with respect to the weight of the dicarboxylic acid mixture, and adipic acid in an amount by weight between 30% and 34% with respect to the weight of the dicarboxylic acid mixture.

The reaction between diethanolamine and the dicarboxylic acid mixture is preferably carried out at a temperature ranging from 60 to 90 °C, more preferably from 150 °C to 160 °C.

The reaction is preferably carried out in a stream of an inert gas, for example nitrogen, or under vacuum. Normally, the reaction is conducted at atmospheric pressure.

The reaction can be carried out in the presence of a suitable solvent. The same diethanolamine can be used as a solvent for the reaction.

The reaction can also be carried out in the absence or presence of a catalyst.

The reaction is monitored by means of water distillation, at a substantially constant temperature, which indicates the progress of the polymerization. At the end of the polymerization between the dicarboxylic acid mixture and the diethanolamine, a temperature increase is observed.

According to an embodiment of the invention, said product obtainable by reaction of diethanolamine with a mixture of dicarboxylic acids consists of a mixture of esters, amides, polyesters, polyamides, polyesters-amides, polyesters-amides-ethers.

In one aspect of the invention, at least 50% of the molecules in the product obtainable by reaction of diethanolamine with a dicarboxylic acid mixture according to the present invention have a molecular weight higher than 497 Da.

In one aspect of the invention, the product obtainable by reaction of diethanolamine with a mixture of dicarboxylic acids comprises a polymer of formula I: 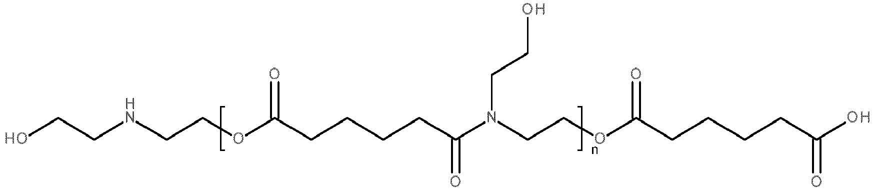 wherein n is between 1 and 10, preferably between 1 and 5.

According to an embodiment thereof, the tanning agent according to the invention comprises a polymer of formula I in which n = 1.

The analytical characterization of the product obtainable by the above described reaction can be carried out by means of analytical techniques known in the art, for example by means of ESI-MS analysis, NMR and FT-IR spectroscopy.

The present invention also relates to a process for obtaining the tanning agent having the above illustrated characteristics.

According to another aspect, the invention relates to a process of pre-tanning and / or tanning and / or retanning of hides in which a tanning agent is used which can be obtained by reaction of diethanolamine with a mixture of dicarboxylic acids comprising from 2 to 6 carbon atoms and having the preferred above indicated characteristics.

In a pre-tanning or retanning process, the tanning agent according to the invention is used on hides that were previously tanned or that will be subsequently tanned with tanning agents of mineral origin or hides that were previously tanned or that will be subsequently tanned with tanning agents based on catechol or pyrogallol tannins.

The pre-tanning process according to the present invention preferably comprises the following steps:
a) Formation of an aqueous solution of the tanning agent, preferably in a proportion of 1: 3 by weight between the tanning agent and the water;
b) Introduction of the tanning solution and the tanned hides into a tanning container (drum), in which the quantity of tanning agent is between 1% and 10%, preferably between about 2% and 8% by weight with respect to the weight of the pickled hides;
c) Rotation of the tanning container (drum), until the tanning solution is completely absorbed;
d) Possible addition of natural and / or synthetic tannins, in a quantity between 2% and 8% by weight with respect to the weight of the hides.
e) Rotation of the tanning container (drum), until complete absorption;
f) Acidification with carboxylic acids up to a pH between 3.0 and 5.0;
g) Unloading of the hides from the drum;
h) Pressing;
i) Splitting;
j) Shaving.

The speed of rotation of the drum in the pretanning process according to the present invention is preferably from 4 to 12 rpm.

In a tanning process according to the present invention, the hides are normally prepared from the raw hide by the usual operations of soaking, depilation, calcination, skinning, splitting, deliming, maceration and degreasing.

A leather tanning process according to the present invention preferably comprises the following steps:
a) Formation of an aqueous solution of the tanning agent, preferably in a proportion of 1: 3 by weight between tanning agent and water;
b) Introduction of the tanning solution and the pickled hides, ie coming from the pre-tanning or pickling phase, in a tanning container (drum), in which the quantity of tanning agent is between 1% and 20% by weight, preferably from about 2% and 14% by weight with respect to the weight of the pickled hides;
c) Rotation of the tanning container (drum), until the tanning solution is completely absorbed;
d) Possible addition of fatliquoring additives and / or dyes, for example aniline;
e) Acidification with carboxylic acids to a pH between 3.0 and 5.0;
f) Discharge of the hides from the drum;
g) Pressing;
h) Drying.

The speed of rotation of the drum in the tanning process according to the present invention is preferably between 4 and 16 rpm.

In an alternative embodiment of the tanning process, the tanning agent according to the present invention is added to the drum in small portions, until the total quantity, that is above specified with reference to the weight of the hides, is reached.

The tanning process with the tanning agent according to the present invention has been experimented in the tanning of sheep and goat hides, bovine hides and exotic hides. The tanned leathers were full, soft and light. The color of the hides was white.

The invention will be described below with reference to the following non-limiting example.

### Example 1

In a flask containing diethanolamine (220 grams) a mixture of dicarboxylic acids (132 grams) containing 32% adipic acid, 48% glutaric acid and 20% succinic acid was added slowly and under stirring. Once complete dissolution was obtained, the reaction mixture was heated to 120 °C. Then, the reaction container was placed in a nitrogen stream and the reaction mixture was heated, by setting the heater at a temperature of 160 °C. When the temperature of 148 °C was reached, water started to distill off. After 6 hours of distillation the temperature slowly reached 160 °C. The temperature was lowered to 100 °C, about 100 ml of water were added and the nitrogen stream was turned off. Once cooled, the dry residue was weighed with a thermal balance at 110 ° C and the pH was measured, which should oscillate from 6.8 to 7.2.

The obtained product was analyzed by ESI-MS with a Trap VL LC / MSD, Agilent Technologies instrument, by direct infusion with a flow of 8 µl / min of a solution having a concentration of 3mg / ml of product obtained from Example 1 in a 80/20 H₂O / acetonitrile mixture, containing 0.1% formic acid. The operating conditions of the ESEI source and of the ion trap detector were as follows:

| | |
|---|---|
| ESI | positive |
| Nebulizer gas | 15psi |
| Auxiliary gas | 5 psi |
| Capillary Temperature | 300°C |
| Capillary Voltage | 3500V |
| Scan Range | 60-2200m/z |
| Trap drive | 29.7 |

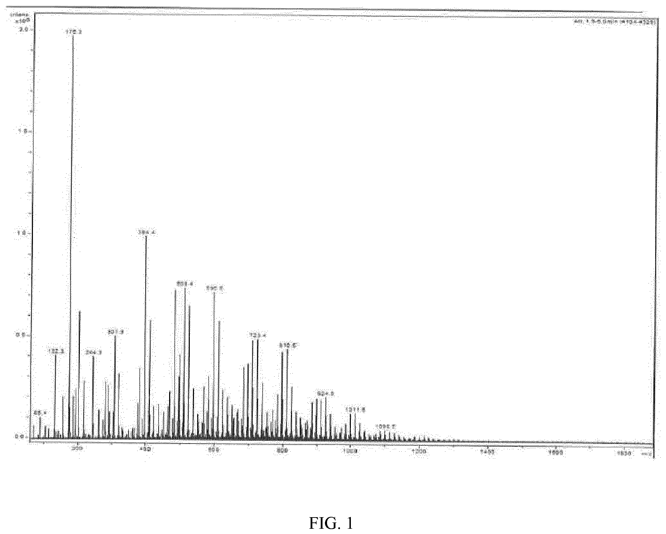

The obtained ESI-MS spectrum is shown in **figure 1****.**

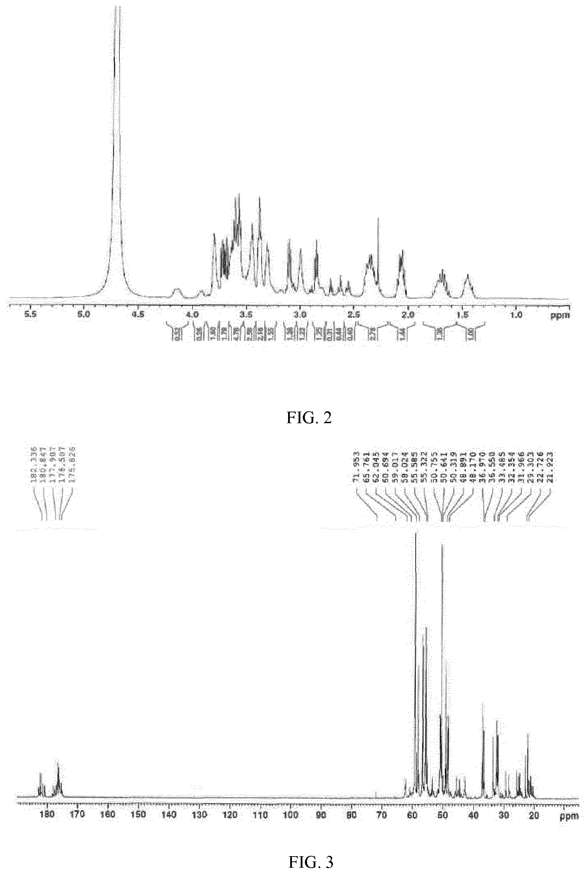

The spectra ¹H-NMR and ¹³C-NMR of the product obtained from example 1, made with NMR Bruker Advance 400 spectrometer, equipped with indirect multinuclear probe with gradient along the z axis, are shown in **figure 2** and **figure 3**, respectively.

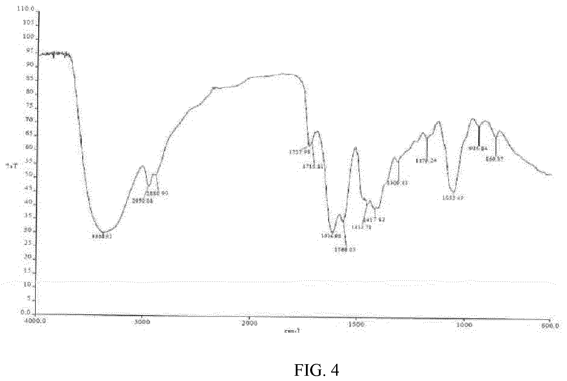

The FT-IR spectrum of the product, recorded after removal of water (final content of water 8%) with a Perkin Elmer 2000 spectrometer on NaCl disk, is shown in **figure 4** (resolution 4 cm⁻¹; scans 6; OPD velocity : 0.3 cm / sec: LiTaO₃ detector).

## Claims

1. Tanning agent for hides, **characterized in that** it comprises a product obtainable by a reaction of diethanolamine with a mixture of dicarboxylic acids, wherein said mixture comprises dicarboxylic acids comprising 2 to 6 carbon atoms.

2. Tanning agent for hides according to claim 1, **characterized in that** said mixture comprises linear aliphatic dicarboxylic acids.

3. Tanning agent for hides according to claim 1 or 2, **characterized in that** in said reaction a molar ratio of diethanolamine to said mixture of dicarboxylic acids of from 1,8:1 to 2,2: 1 is used.

4. Tanning agent for hides according to any of the previous claims, **characterized in that** said mixture comprises succinic acid in a weight amount of from 18% to 22% with respect to the weight of the mixture of dicarboxylic acids, glutaric acid in a weight amount of from 46% to 50% with respect to the weight of the mixture of dicarboxylic acids, and adipic acid in a weight amount of from 30% to 34% with respect to the weight of the mixture of dicarboxylic acids.

5. Tanning agent for hides according to claim 1, **characterized in that** said product obtainable by a reaction of diethanolamine with a mixture of dicarboxylic acids comprises a polymer having the following general formula: 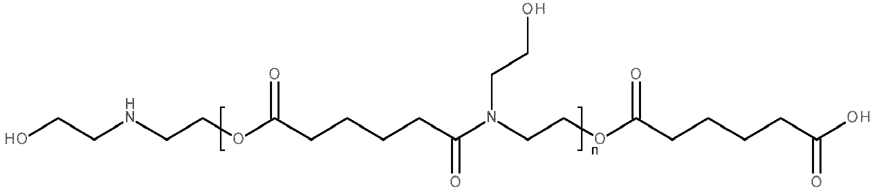 wherein n is an integer from 1 to 10, preferably from 1 to 5.

6. A process for tanning hides comprising a step of applying to a hide a tanning agent according to any of the previous claims.

7. A tanning process according to the previous claim, wherein said tanning agent is applied in a weight amount of from 1% to 20% with respect to the weight of the hides undergoing the tanning process.

8. A tanning process according to the previous claim, wherein said tanning agent is applied in a weight amount of from 2% to 14% with respect to the weight of the hides undergoing the tanning process.

9. A process for pre-tanning hides comprising a step of applying to a hide a tanning agent according to any of the claims from 1 to 5.

10. A process for pre-tanning hides according to the previous claim , wherein said tanning agent is applied in a weight amount of from 2% to 8% with respect to the weight of the hides undergoing the pre-tanning process.

## Patentansprüche

1. Gerbstoff für Tierhäute, **dadurch gekennzeichnet, dass** er ein Produkt enthält, das erhalten wird durch eine Reaktion von Diethanolamin mit einer Mischung von Dicarbonsäuren, wobei die besagte Mischung Dicarbonsäuren umfasst, welche 2 bis 6 Kohlenstoffatome aufweisen.

2. Gerbstoff für Tierhäute gemäß Anspruch 1, **dadurch gekennzeichnet, dass** die besagte Mischung lineare aliphatische Dicarbonsäuren umfasst.

3. Gerbstoff für Tierhäute gemäß Anspruch 1 oder 2, **dadurch gekennzeichnet, dass** in der besagten Reaktion ein Molverhältnis des Diethanolamins zu der besagten Mischung von Dicarbonsäuren zwischen 1,8 : 1 und 2,2 : 1 verwendet wird.

4. Gerbstoff für Tierhäute gemäß einem der vorangehenden Ansprüche, **dadurch gekennzeichnet, dass** die besagte Mischung Bernsteinsäure in einem Gewichtsanteil von 18% bis 22%, bezogen auf das Gewicht der Mischung von Dicarbonsäuren, umfasst, Glutarsäure in einem Gewichtsanteil von 46% bis 50%, bezogen auf das Gewicht der Mischung von Dicarbonsäuren, sowie Adipinsäure in einem Gewichtsanteil von 30% bis 34%, bezogen auf das Gewicht der Mischung von Dicarbonsäuren.

5. Gerbstoff für Tierhäute gemäß Anspruch 1, **dadurch gekennzeichnet, dass** das besagte, durch eine Reaktion von Diethanolamin mit einer Mischung von Dicarbonsäuren erhaltene Produkt ein Polymer der folgenden allgemeinen Formel umfasst: 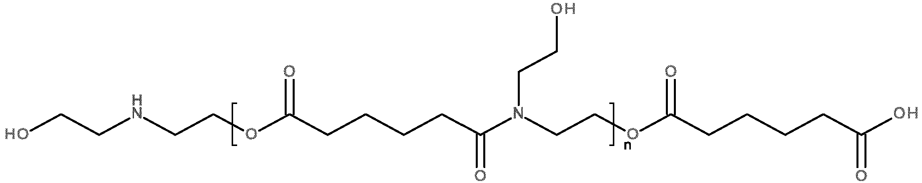 wobei n eine ganze Zahl zwischen 1 und 10 ist, vorzugsweise zwischen 1 und 5.

6. Verfahren zum Gerben von Tierhäuten, umfassend einen Schritt des Anwendens eines Gerbstoffs gemäß einem der vorangehenden Ansprüche auf eine Tierhaut.

7. Gerbverfahren gemäß dem vorangehenden Anspruch, wobei der besagte Gerbstoff in einem Gewichtsanteil von 1% bis 20%, bezogen auf das Gewicht der dem Verfahren des Gerbens unterzogenen Tierhäute, angewendet wird.

8. Gerbverfahren gemäß dem vorangehenden Anspruch, wobei der besagte Gerbstoff in einem Gewichtsanteil von 2% bis 14%, bezogen auf das Gewicht der dem Verfahren des Gerbens unterzogenen Tierhäute, angewendet wird.

9. Verfahren zum Vorgerben von Tierhäuten, umfassend einen Schritt des Anwendens eines Gerbstoffs gemäß einem der Ansprüche 1 bis 5 auf eine Tierhaut.

10. Verfahren zum Vorgerben von Tierhäuten gemäß dem vorangehenden Anspruch, wobei der besagte Gerbstoff in einem Gewichtsanteil von 2% bis 8%, bezogen auf das Gewicht der dem Verfahren des Vorgerbens unterzogenen Tierhäute, angewendet wird.

## Revendications

1. Agent tannant pour peaux, **caractérisé en ce qu'**il comprend un produit pouvant être obtenu par la réaction de diéthanolamine avec un mélange d'acides dicarboxyliques, dans lequel ledit mélange comprend des acides dicarboxyliques comprenant 2 à 6 atomes de carbone.

2. Agent tannant pour peaux selon la revendication 1, **caractérisé en ce que** ledit mélange comprend des acides dicarboxyliques aliphatiques linéaires.

3. Agent tannant pour peaux selon la revendication 1 ou 2, **caractérisé en ce que**, dans ladite réaction, un rapport molaire de la diéthanolamine audit mélange d'acides dicarboxyliques de 1,8/1 à 2,2/1 est utilisé.

4. Agent tannant pour peaux selon l'une quelconque des revendications précédentes, **caractérisé en ce que** ledit mélange comprend de l'acide succinique en une quantité en poids de 18 % à 22 % par rapport au poids du mélange d'acides dicarboxyliques, de l'acide glutarique en une quantité en poids de 46 % à 50 % par rapport au poids du mélange d'acides dicarboxyliques, et de l'acide adipique en une quantité en poids de 30 % à 34 % par rapport au poids du mélange d'acides dicarboxyliques.

5. Agent tannant pour peaux selon la revendication 1, **caractérisé en ce que** ledit produit pouvant être obtenu par la réaction de diéthanolamine avec un mélange d'acides dicarboxyliques comprend un polymère de formule générale suivante : 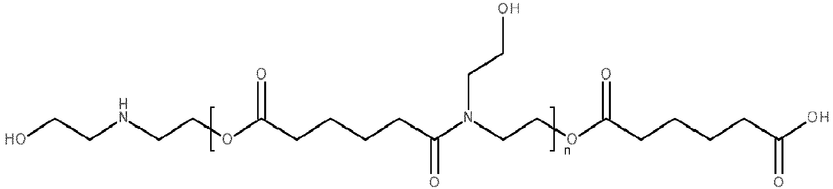 dans laquelle n est un entier de 1 à 10, de préférence de 1 à 5.

6. Procédé pour tanner des peaux, comprenant une étape d'application à une peau d'un agent tannant selon l'une quelconque des revendications précédentes.

7. Procédé de tannage selon la revendication précédente, dans lequel ledit agent tannant est appliqué en une quantité en poids de 1 % à 20 % par rapport au poids des peaux subissant le procédé de tannage.

8. Procédé de tannage selon la revendication précédente, dans lequel ledit agent tannant est appliqué en une quantité en poids de 2 % à 14 % par rapport au poids des peaux subissant le procédé de tannage.

9. Procédé pour pré-tanner des peaux, comprenant une étape d'application à une peau d'un agent tannant selon l'une quelconque des revendications 1 à 5.

10. Procédé pour pré-tanner des peaux selon la revendication précédente, dans lequel ledit agent tannant est appliqué en une quantité en poids de 2 % à 8 % par rapport au poids des peaux subissant le procédé de pré-tannage.
